# EUROPEAN PATENT APPLICATION

(11) **EP 3 435 576 A1**
(43) Date of publication of application: **30.01.2019**
(21) Application number: 17183309.8
(22) Date of filing: 26.07.2017
(51) Int. Cl.: H04L 1/18, H04L 1/16

(54) **AN APPARATUS, A METHOD AND A COMPUTER PROGRAM FOR CONTROLLING PACKET TRANSMISSION**

(71) Applicant: Intel IP Corporation, Santa Clara, CA 95054 (US)
(72) Inventor: DUER, Manfred, 85579 Neubiberg (DE); ZORN, Andre, 85579 Neubiberg (DE); LEICHT, Hans, 91364 Unterleinleiter (DE)
(74) Representative: 2SPL Patentanwälte PartG mbB

(57) **Abstract**

Examples provide a packet transmission controller, an apparatus, a method and a computer program for controlling packet transmission, a radio transceiver, a mobile terminal, a base station transceiver and a mobile communication system. The packet transmission controller (10) for a transceiver (100) of a mobile communication system (300) comprises a memory module (12) configured to store data packets and a transceiver module (14) configured to communicate data packets and acknowledgment packets over the air interface or the antenna. The acknowledgement packets comprise positive or negative acknowledgements for a successful or an unsuccessful communication of the data packets. The packet transmission controller (10) further comprises a control module (16) configured to control the memory module (12) and the transceiver module (14). The control module (16) is configured to assign and monitor a buffer to store communicated data packets until successful communication of the stored data packets is acknowledged in an acknowledgement packet. The control module (16) is further configured to effect communication of an acknowledgment data packet if a buffer utilization exceeds a predefined threshold.

## Description

### Field

Examples relate to a packet transmission controller, an apparatus, a method and a computer program for controlling packet transmission, a radio transceiver, a mobile terminal, a base station transceiver and a mobile communication system, and in particular, but not exclusively, to a concept for buffer or memory utilization management in radio link layer processing.

### Background

With the growing demand for wireless services, Radio Frequency (RF) circuits become more and more versatile. For example, the number of wireless access technologies and the frequency range in which mobile communication systems are active are growing, whereas physical size and power consumption of RF units are decreasing. For example, 5^{th} Generation (5G) systems may operate using mm-wave technology, e.g. the U.S. Federal Communications Commission (FCC) approved spectrum for 5G, including the 28, 37, and 39 GHz bands.

For example, with the evolvement of the Universal Mobile Telecommunication System (UMTS), data transmission is possible with steadily increasing data rates. In scenarios of simultaneous data transfer in both directions (uplink and downlink) at high data rates a large amount of data needs to be buffered by the UMTS Layer 2 when HARQ (Hybrid Automatic Repeat Request) retransmissions fail and especially when ARQ (Automatic Repeat Request) retransmissions on RLC (Radio Link Control) layer are required.

For data transfer via multiple air interface paths (Carrier Aggregation (CA)) there are even scenarios in which different air interface paths have quite deviating quality characteristics. Data reception on one link might run at high data rate with nearly no losses, whereas the data transfer on the other link can show large amount of lost data (pending retransmission). As a consequence the receiving UMTS RLC entity is required to buffer large amount of data while waiting for the retransmissions of lost data packets.

At the same time the transmitting UMTS RLC entity might need to buffer a large amount of already transmitted data while waiting for acknowledgement of this data by the UMTS RLC peer entity via RLC status reports. Since such RLC status report transmissions are by no means protected via ARQ, those acknowledgements might get lost on the air interface. This also increases the duration for how long data has to be stored and the amount of the required buffer size.

Depending on the amount of exchanged user data and the quality of the air interface connection the UMTS RLC receive entity needs to buffer a large amount of user data, especially when some user data packets get lost on the air interface. For RLC acknowledged mode (AM, AM Data (AMD)), the receiving RLC entity ensures lossless data transfer by requesting retransmission of the missing user data (which is transferred within RLC AMD PDUs) by sending RLC STATUS Packet Data Units (PDUs) to the RLC peer entity (Automatic Repeat Request (ARQ) procedure).

In scenarios where transmission of single RLC AMD PDUs repeatedly fails but in general data transfer on high data rates is possible, the UMTS Layer 2 needs to buffer all received RLC AMD PDUs. Delivery to higher layers is not possible because it is required to deliver received RLC AMD PDUs in sequence, without any gaps. With the introduction of Carrier Aggregation, where data transfer uses multiple air interface paths, the likelihood of such scenarios increased as different air interface paths often have quite deviating quality characteristics. Data reception on one link might run at high data rate with nearly no losses, whereas the data transfer on the other link can show large amount of lost (and thus retransmitted) data.

Although the minimum available Layer 2 buffer size typically increases with increasing data rates and increasing UE capability (refer for example to Table 5.1h of the 3^{rd} Generation Partnership Project (3GPP) Technical Specification (TS) 25.306 for Frequency Division Duplex (FDD) High Speed Downlink Shared CHannel (HS-DSCH) and Enhanced Dedicated CHannel (E-DCH)), there is always the risk that the available Layer 2 buffer size is not enough in some scenarios and as a result user data eventually needs to be discarded by UMTS Layer 2. In such a case depending on the type of user data the data would then be either totally lost (e.g. Universal Datagram Protocol (UDP)) or retransmission on higher layer would be required (e.g. File Transfer Protocol (FTP)).

For example, 3GPP defined poll triggers of the RLC transmitting/receiving entities, details of which can be found in 3GPP TS 25.322 version 14.0.0, chapter 9.7.2. The already specified triggers for transmission of an RLC STATUS PDU are summarized below, for details refer to 3GPP TS 25.322, chapter 9.7.2:
1) Poll request from its peer RLC AM entity, i.e. reception of an RLC AMD PDU with poll bit set to 1 in the RLC header;
2) Detection of missing PDU(s); and
3) Timer based status report transfer: The receiving entity triggers the transmission of a status report periodically.

The already specified triggers for poll bit setting are summarized below, for details refer to 3GPP TS 25.322, chapter 9.7.1:
1) Poll_PDU: to trigger a poll regularly every "Poll_PDU" PDUs;
2) POLL_SDU: to trigger a poll after transmission of every "Poll_SDU" SDUs;
3) Window based: to trigger a poll depending on the fill level of the transmission window;
4) Timer based: to trigger a poll periodically;
5) Poll timer: to trigger a poll on timer poll expiry; and
6) Both transmission and retransmission buffer become empty (window stalling).

### Brief description of the Figures

Some examples of circuits, apparatuses, methods and/or computer programs will be described in the following by way of example only, and with reference to the accompanying figures, in which
Fig. 1 illustrates an example of a packet transmission controller or an apparatus for controlling packet transmission, a radio terminal, a mobile transceiver, a base station transceiver, and a mobile communication system;
Fig. 2 shows a receive and transmit window of an RLC AM radio bearer in an example;
Fig. 3 depicts an RLC AM receive window during data reception in an example;
Fig. 4 depicts a flow chart of data processing of an RLC entity for AMD PDU in an example;
Fig. 5 depicts a flow chart of data processing of a receiving RLC entity for OOS AMD PDU in an example;
Fig. 6 shows examples of a mobile terminal, a base station transceiver and a mobile communication system; and
Fig. 7 depicts a block diagram of a method for controlling packet transmission in an example.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled, or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than two elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Some examples are based on the finding that existing triggers for acknowledgment packets, such as a status PDU in 3GPP, might not be sufficient for memory management. While examples are not restricted or limited to 3GPP systems or specifications, 3GPP RLC may serve as basic example. It is a finding that if the optional parameters "Poll_PDU", "Poll_SDU", "Poll_Window" or "timer based polling" are not configured appropriately or not configured at all, then a "Poll" might only be sent when the RLC transmission and retransmission queues run empty or the RLC transmit window becomes full (stalled), which will be further illustrated and detailed subsequently. Even when those optional parameters are configured, but with values being too high, a poll might be sent too rarely or too late with respect to memory management.

Furthermore, it is a finding that in the 3GPP system transmission of RLC STATUS PDUs is not protected via ARQ. Instead, an RLC STATUS PDU is finally lost in case all HARQ (Hybrid Automatic Repeat Request) transmissions fail. Then the RLC layer needs to wait until a timer "Timer_Status_Prohibit" expires before being allowed to transmit a new RLC STATUS PDU. When RLC STATUS PDU transmission or related RLC AMD PDU retransmissions or both repeatedly fail, or when the configured value of timer "Timer_Status_Prohibit" is just too high for the utilized data rate, then the available Layer 2 buffer might get exhausted. Examples are further based on the finding that one possibility to prevent or at least to reduce the likelihood of those scenarios is to trigger transmission of an RLC STATUS PDU when the fill level of the remaining Layer 2 buffer becomes critical.

But with the existing statically configured RLC STATUS PDU triggers this is often not possible. If it would be possible to reduce the amount of already transmitted (but still buffered) data which is just waiting to be acknowledged, the available memory could be used much more efficiently, which can be enabled at least by some examples. In addition to the already specified triggers to send a UMTS RLC STATUS PDU, examples may enable a receiving RLC entity to also send a UMTS RLC STATUS PDU when the fill level of the available Layer 2 memory becomes critical. In addition to the already specified triggers to set a poll, in examples the UMTS RLC transmitting entity is enabled to also set the poll bit in RLC AMD PDUs when the fill level of available Layer 2 memory becomes critical and a large number of already transmitted RLC AMD PDUs is waiting for acknowledgement via RLC status reporting.

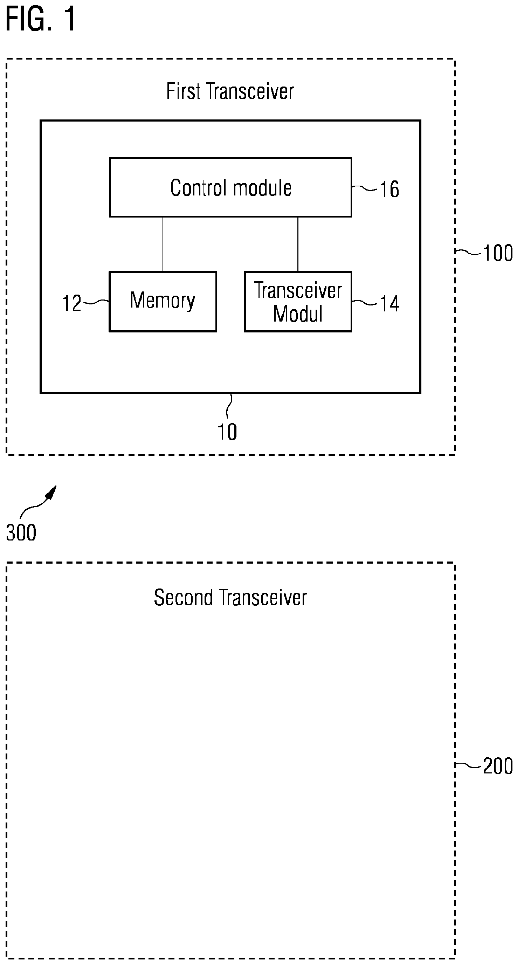

Fig. 1 illustrates an example of a packet transmission controller 10 or an apparatus 10 for controlling packet transmission, a radio terminal 100, a mobile transceiver 100, a base station transceiver 200, and a mobile communication system 300. The packet transmission controller 10 is configured for a transceiver 100 of a mobile communication system 300. The packet transmission controller 10 comprises a memory module 12, which is configured to store data packets. The packet transmission controller 10 further comprises a transceiver module 14, which is configured to communicate data packets and acknowledgment packets over an air interface or an antenna. For example, the transceiver 100 may be a first transceiver, e.g. mobile transceiver or base station transceiver, being configured to communicate with a second transceiver 200 of the mobile communication system 300, e.g. a base station transceiver or mobile transceiver, respectively. The acknowledgement packets comprise positive or negative acknowledgements for a successful or an unsuccessful communication of the data packets.

The packet transmission controller 10 further comprises a control module 16, which is coupled to the transceiver module 14 and the memory module 12. The control module 16 is configured to control the memory module 12 and the transceiver module 14. The control module 16 is configured to assign and monitor a buffer to store communicated data packets until successful communication of the stored data packets is acknowledged in an acknowledgement packet. The control module 16 is further configured to effect communication of an acknowledgment data packet, e.g. with the second transceiver 200, if a buffer utilization exceeds a predefined threshold.

Here and in the following the term "communicate" or "communicating" indicates information transmission, information reception, or both, information transmission and reception. Hence the term is used interchangeably with "transmit/transmitting" or "receive/receiving" or both "transmit and receive/transmitting and receiving". Furthermore, the described packets may be received or transmitted over the air interface or the antenna. In the following examples such communication will be described in relation to the second transceiver 200. However, from the perspective of the transceiver 100 or first transceiver 100 packets may be communicated, transmitted and/or received over the air interface or the antenna.

In examples the memory module 12 may be implemented as or correspond to any means for storing, any means for memorizing, one or more memory units, one or more memory devices, one or more storage units, one or more storage devices. Any of these may be implemented using volatile or non-volatile memory or storage. Examples are Random Access Memory (RAM), solid state memory, flash memory, etc. Examples are not limited or restricted to any specific kind of memory, for as long as the memory serves the purpose of storing or memorizing data packets.

In examples the transceiver module 14 may comprise typical transceiver components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The transceiver module 14 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field, a field array, combinations thereof, etc. In some examples the transceiver module 14 may serve the purpose of transmitting or receiving or both, transmitting and receiving, data packets and acknowledgment packets. In some examples, the transceiver module 14 can be or comprise one or more interfaces, which may correspond to any means for obtaining, receiving, transmitting or providing analog or digital signals or information, e.g. any connector, contact, pin, register, input port, output port, conductor, lane, etc. which allows providing a signal. An interface may be wireless or wireline and it may be configured to communicate, i.e. transmit or receive signals or information with further internal or external components.

In examples the control module 16 may be implemented using one or more processing units, one or more processing devices, any means for processing, any means for determining, any means for calculating, such as a processor, a computer or a programmable hardware component being operable with accordingly adapted software. In other words, the described function of the control module 16 may as well be implemented in software, which is then executed on one or more programmable hardware components. Such hardware components may comprise a general purpose processor, a Digital Signal Processor (DSP), a microcontroller, etc.

In examples the mobile communication system 300 may correspond to any Radio Access Technology (RAT). And the corresponding transceivers (mobile transceivers, user equipment base stations, relay stations, etc.) may, for example, operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuL-TEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code Division Multiple Access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Public Land Mobile Telephony), MTD (Swedish abbreviation for Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handyphone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth®, Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others, etc.

Moreover, the mobile communication system 300 may be used or operated in the context of any spectrum management scheme including dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies). Applicable spectrum bands include IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc.). Note that some bands are limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 64 - 71 GHz, 71 - 76 GHz, 81 - 86 GHz and 92 - 94 GHz, etc), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications. Note furthermore that a hierarchical application of the scheme is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

Examples may also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

An access node, base station or base station transceiver can be operable to communicate with one or more active mobile transceivers or terminals and a base station transceiver can be located in or adjacent to a coverage area of another base station transceiver, e.g. a macro cell base station transceiver or small cell base station transceiver. Hence, examples may provide a mobile communication system 300 comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as UE or mobile in line with the 3GPP terminology.

A base station transceiver can be located in the fixed or stationary part of the network or system 300. A base station transceiver may correspond to a remote radio head, a transmission point, an access point or access node, a macro cell, a small cell, a micro cell, a femto cell, a metro cell, etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, etc., which may be further divided into a remote unit and a central unit.

Fig. 1 also illustrates an apparatus 10 for controlling packet transmission for a first transceiver 100 of a mobile communication system 300. The apparatus 10 comprises means 12 for storing data packets and means 14 for communicating data packets and acknowledgment packets with a second transceiver 200 of the mobile communication system 300. The acknowledgement packets comprise positive or negative acknowledgements for a successful or an unsuccessful communication of the data packets. The apparatus 10 further comprises means 16 for controlling the means 12 for storing and the means 14 for communicating. The means 16 for controlling is configured for assigning and monitoring a buffer storing communicated data packets until successful communication of the stored data packets is acknowledged in an acknowledgement packet. The means for controlling 16 is further configured for effecting communication of an acknowledgment data packet with the second transceiver 200 if a buffer utilization exceeds a predefined threshold. The components of the apparatus 10 are defined as component means, which correspond to the respective structural components of the access node controller 10. The following description for the structural components applies equally to the respective means.

Fig. 1 further illustrates an example of a radio transceiver 100 as optional component shown in dashed/broken lines comprising the packet transmission controller 10 or apparatus 10. Such a radio transceiver 100 may be comprised in a mobile terminal, a base station transceiver, or any transceiver of a mobile communication system 300, which all are other examples. In other words in the example of Fig. 1 the first transceiver 100 may be a mobile transceiver, a base station transceiver or any other transceiver (e.g. a relay station) of the mobile communication system 300. The second transceiver 200 may also be a mobile transceiver, a base station transceiver or any other transceiver (e.g. a relay station) of the mobile communication system 300. Hence, the communication in examples may take place between mobile transceivers (device-to-device), between a mobile transceiver and a base station transceiver, or between base station transceivers (e.g. between a relay station and a base station transceiver).

In some examples relating to the 3GPP protocol architecture, e.g. when Layer 2 buffer gets exhausted, it may be important to use the available memory as efficient as possible in order to prevent loss (discard) of user data as much as possible. In order to prevent Layer 2 buffer to exhaust it is important to request retransmission of missing RLC AMD PDUs in due time. With the existing triggers for transmission of an RLC STATUS PDU this might often not be possible because, for example, no RLC AMD PDU with poll bit is received due to inappropriate or missing polling configuration, or no RLC AMD PDU with poll bit is received because this PDU got lost on the air interface. Another reason may be that a transmitted RLC STATUS PDU got lost on the air interface and a running timer Timer_Status_Prohibit prevents transmission of a new RLC STATUS PDU.

In addition to those missing or delayed triggers for the transmission of an RLC STATUS PDU, it can happen that the requested transmission of RLC AMD PDUs fails. A new trigger to send an RLC STATUS PDU might again be missing or delayed and the receiving RLC entity needs to continue buffering all newly received Out Of Sequence (OOS) PDUs. Examples may introduce an additional trigger on the receiving RLC AM entity for transmission of an RLC STATUS PDU in case the fill level of the available Layer 2 buffer becomes critical. Furthermore, in case the configured duration of timer Timer_Status_Prohibit is very long causing the Layer 2 buffer to get exhausted, the RLC AM entity can be allowed to force transmission of an RLC STATUS PDU, even when timer Timer_Status_Prohibit is still running at least in some examples.

For example, an RLC poll bit is also set in scenarios where the fill level of the available Layer 2 buffer becomes critical and large amount of already transmitted user data is buffered, waiting for acknowledgement (via RLC status reporting) from RLC peer entity. In such scenarios a UMTS RLC entity can be allowed to request the transmission of an RLC status report from its RLC peer entity by setting the poll bit within the next transmitted RLC AMD PDU in some examples. Then, on reception of an RLC Status report, the memory for all positively acknowledged RLC AMD PDUs can be freed and becomes available again for alternative usage in the UMTS Layer 2.

In case of data transmission at very high rate a large amount of data may be buffered in a UMTS RLC transmitting entity until it gets acknowledged via RLC status reporting. For example, a UE operating in DownLink (DL) with Category 8 and in UpLink (UL) with Category 6 has a minimum total Layer 2 buffer size of 300 kBytes according to Table 5.1h of 3GPP TS 25.306 for FDD HS-DSCH and E-DCH. Assuming a 2 ms TTI, the maximum data rate for a Category 8 UE in DL is 7036 kbps whereas for a Category 6 UE in UL it is 5607 kbps (cf. Table 5.1a: FDD HS-DSCH physical layer categories and Table 5.1g: FDD E-DCH physical layer categories, respectively, in 3GPP TS 25.306). Therefore, if no status report is received/sent for UL/DL, the 300 kBytes of the Layer 2 memory are exhausted after (300kBytes * 8) / (7036 kbps + 5607 kbps) = 190 ms.

In scenarios where the fill level of the available UMTS Layer 2 memory becomes critical, examples may help to reduce the likelihood of exhausted Layer 2 buffers. Independent of statically configured values of UMTS RLC parameters such as the duration of timer Timer_Status_Prohibit and the polling configuration, the transmission of an RLC STATUS PDU may be dynamically triggered as needed.

In scenarios where the available UMTS Layer 2 memory gets exhausted and large amount of already transmitted data is waiting for acknowledgement via RLC status reports, examples may help to prevent the likelihood of exhausted buffers.

At least in some examples sending or transmitting of an extra poll may be done to prevent that Layer 2 buffer gets exhausted. There is no overhead as the poll bit (P) is anyway present in the fixed part of an RLC AMD header (first two octets, refer to 3GPP TS 25.322, chapter 9.2.1.4) and is just set to 1 when the poll trigger is given. There might not be negative side effects because the frequency of transmitted RLC status reports is limited anyway on the RLC peer entity side via the configurable timer Timer_Status_Prohibit. Independent of possibly unsuitable values for configured parameters "Poll_PDU", "Poll_SDU", "Poll_Window" or "timer based polling", an RLC status report is requested as needed and does not depend on a static configuration.
If an RLC status report gets lost (i.e. all HARQ transmissions failed) the repeated sending of a poll increases the likelihood for a new transmission of an RLC status report by the RLC peer entity as soon as timer Timer_Status_Prohibit expires.

In some examples the control module 16, cf. Fig. 1, is configured to provide successfully acknowledged data packets to a further processing entity in sequence. The data packet may be provided in a predefined order to the further processing entity, e.g. another protocol layer in the protocol stack. In sequence delivery is a feature that can be implemented by means of sequence numbers, which may be present in a protocol header. In order to be able to deliver data packets in sequence, intermediate data packets are buffered until they can be provided in a continuous manner (without gaps, i.e. missing intermediate data packets). The control module 16 may be further configured to store data packets received from the second transceiver 200 in the buffer. The buffer is a memory amount or memory section assigned for the purpose of storing data packets or PDUs for in sequence delivery. Hence, the control module 16 can be further configured to sequentially forward acknowledged data packets to a further processing entity of the first transceiver 100.

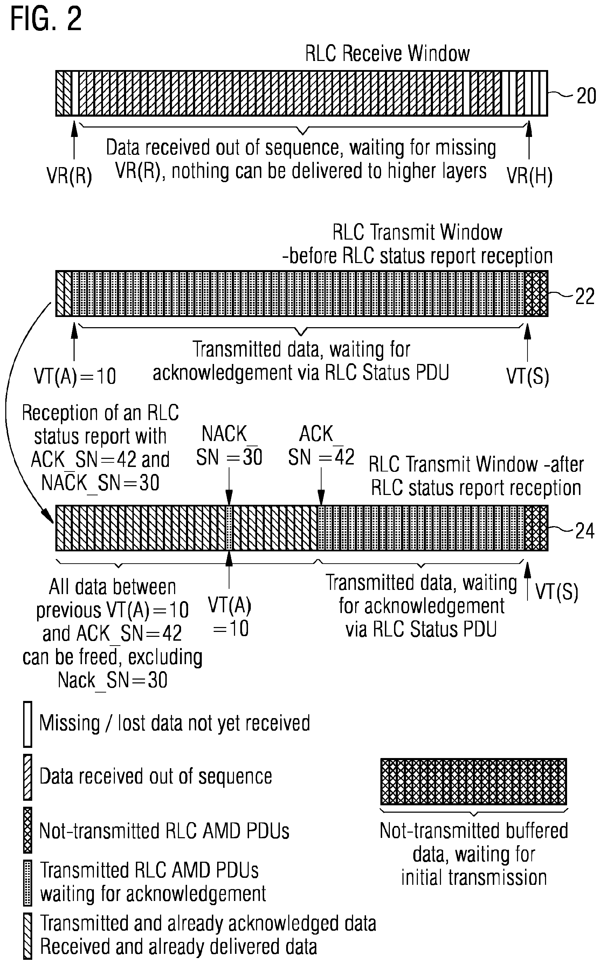

Fig. 2 shows a receive and transmit window of an RLC AM radio bearer in an example. The transmission side is detailed first and the receiver side is detailed subsequently. In some examples the transmitter or receiver aspect may be implemented separately and independently or for one or both directions of transmission. In an example, cf. Fig. 1, the control module 16 is configured to transmit data packets to the second transceiver 200 and to store data packets transmitted to the second transceiver 200 in the buffer. The control module 16 is further configured to delete sequentially acknowledged data packets from the buffer.

Fig. 2 shows the RLC receive window 20 at the top, an RLC transmit window before RLC status report reception 22 in the center, and the RLC transmit window after RLC status report reception 24 at the bottom. Different PDUs are indicated using different hachures in line with the legend provided in Fig. 2. The RLC receive window 20 depicted is of an AM radio bearer in a scenario where received user data (carried by RLC AMD PDUs) cannot be delivered to a higher layer because a user packet (RLC AMD PDU represented by VR(R)) got lost. In the following VR(R) and VR(H) are RLC receive window pointers, which carry sequence numbers of data packets (PDUs). The window defined between VR(R) and VR(H) holds the data received out of sequence beginning with the sequence number of a missing or lost PDU with the lowest sequence number. In this example, the forwarding or delivery to higher layers has to wait until the missing PDU with sequence number VR(R) is received.

Fig. 2 also illustrates the RLC transmit window 22 of an AM radio bearer in a scenario where already transmitted user data (carried by RLC AMD PDUs between VT(A)=10 and VT(S)) cannot be freed yet, because the acknowledgement via RLC status report from the RLC peer entity was not yet received. In the following VR(R), VR(H), VT(A), VT(S) are RLC window pointers, which carry sequence numbers of data packets (PDUs). In this example the RLC AM transmit window of this radio bearer is also shown after reception 24 of an RLC status report positively acknowledging RLC AMD PDU sequence numbers up to 41 (ACK_SN=42) except for sequence number SN=30 which is negatively acknowledged (NACK_SN=30). There, the RLC state variable VT(A) has been shifted to the first negatively acknowledged sequence number, NACK_SN=30, and all user data between previous VT(A)=10 and ACK_SN=42 can be freed (deleted), excluding the negatively acknowledged AMD PDU with SN=30.

Fig. 2 also shows non-transmitted data which is buffered in the UMTS Layer 2 and waiting for initial transmission. All those user data needs to be stored in the UMTS Layer 2 buffer. In an example the control module 16 is configured to transmit data packets to the second transceiver 200 and to request an acknowledgement packet from the second transceiver 200, if the buffer utilization exceeds the predefined threshold. On the transmitter side, an acknowledgement packet may be requested from the receiving side based on the buffer utilization. In some examples the control module 16 is configured to transmit an acknowledgment packet to the second transceiver 200 if the buffer utilization exceeds the predefined threshold and a predefined time since a transmission of a previous acknowledgment packet has expired. Such a predefined time may be implemented using a timer. The timer may avoid too frequent transmission of acknowledgement packets.

In further examples there may be different kinds of data, e.g. serving different kinds of radio bearer modes. For example, data packets as described so far are acknowledged mode data packets. The control module 16 can be configured to further communicate non-acknowledged mode data packets for which no acknowledgment packets are communicated. The control module 16 may be configured to effect communication of an acknowledgment data packet with the second transceiver 200 if the buffer utilization exceeds the predefined threshold and if a communicated data packet is an acknowledged mode data packet.

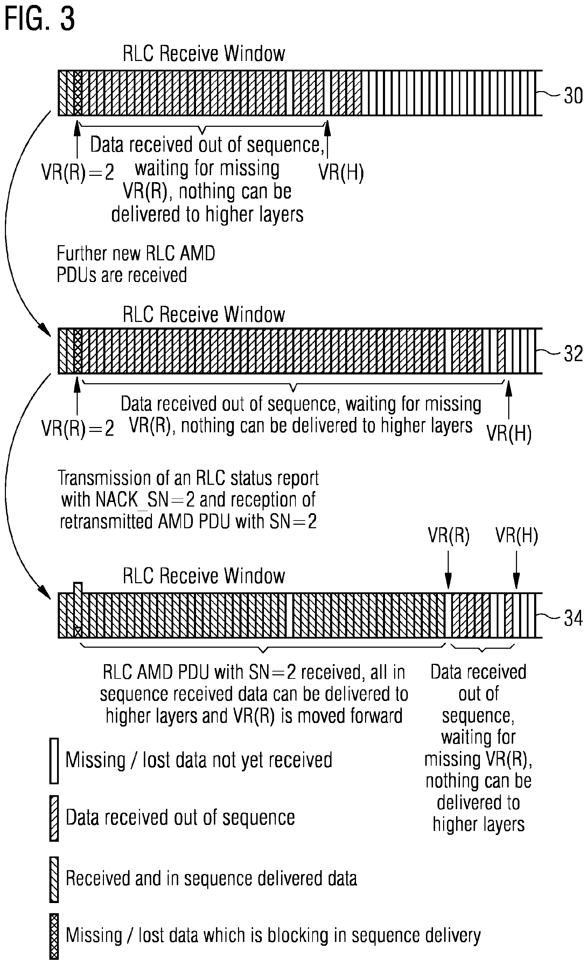

Fig. 3 depicts an RLC AM receive window during data reception in an example. Fig. 3 shows the RLC receive window before reception of new RLC AMD PDUs 30 at the top, the RLC receive window after reception of the new RLC AMD PDUs 32 in the middle, and the RLC receive window after transmission of the RLC status report 34 at the bottom. The different categories of PDUs (Missing/lost data not yet received, Missing / lost data which is blocking in sequence delivery, data received out of sequence, and received and in sequence delivered data) are indicated using the different hachures in line with the legend shown.

Fig. 3 illustrates the RLC AM receive window of a radio bearer in a scenario where received user data (carried by RLC AMD PDUs) cannot be delivered to a higher layer because a user packet (RLC AMD PDU with SN=2 represented by VR(R)) got lost repeatedly, cf. windows 30 and 32 in Fig. 3. All subsequently received user data (RLC AMD PDUs) up to VR(H)) need to be buffered until the missing user data packet is received. After reception of the AMD PDU with SN=2 all in sequence received data can be delivered to higher layers and VR(R) can be moved forward, cf. window 34 in Fig. 3.

In an example the control module 16 is configured to transmit an acknowledgment packet to the second transceiver 200 if the buffer utilization exceeds the predefined threshold. The transmission of the acknowledgment packet may negatively acknowledge one or more data packets and hence effect retransmission of such data packets, cf. Fig. 3 32 to 34.

In examples, the control module 16 may be configured to assign the buffer for transmitted data packets and for received data packets; for example, separate buffers may be assigned in the same memory module 12. The control module 16 may be configured to effect communication of an acknowledgment data packet with the second transceiver 200 if an overall buffer utilization for the transmitted and the received data packets exceeds the predefined threshold.

In a further example, the control module 16 can be configured to assign the buffer for transmitted data packets and for received data packets. The control module 16 may be configured to effect the communication of the acknowledgment data packet with the second transceiver 200 if an overall buffer utilization for the transmitted and the received data packets exceeds a predefined first threshold and if a buffer amount of transmitted but not acknowledged data packets exceeds a second threshold. At least some examples may monitor two thresholds on the transmitter side, one for the overall buffer and one for buffered transmitted but not acknowledged data packets.

In a further example, from the receiver perspective, the data packets are acknowledged mode data packets. The control module 16 may be configured to further communicate non-acknowledged mode data packets for which no acknowledgment packets are communicated, as was described above. The control module 16 can be configured to transmit an acknowledgment data packet to the second transceiver 200 if an acknowledged mode data packet is received out of sequence and if the buffer utilization exceeds the predefined threshold. In another example the control module 16 is configured to assign the buffer for transmitted data packets and for received data packets. The control module 16 can be configured to transmit the acknowledgment data packet to the second transceiver 200 further if an overall buffer utilization for the transmitted and the received data packets exceeds the predefined threshold. In further examples the control module 16 can be configured to transmit the acknowledgment data packet to the second transceiver 200 further if a predefined time since transmission of a previous acknowledgment packet has expired.

In some examples the predefined threshold is a first predefined threshold. The control module 16 is configured to transmit the acknowledgment data packet to the second transceiver 200 further if the overall buffer utilization for the transmitted and the received data packets exceeds a second predefined threshold and if a time since transmission of the previous acknowledgment packet is less than the predefined time, wherein the second predefined threshold is higher than the first predefined threshold. Hence, in some examples the acknowledgment data packet may be transmitted although the timer has not expired. The respective thresholds and timer settings can be set dynamically in examples to adapt to the corresponding capabilities available, e.g. overall memory capability.

In examples the control module 16 may be configured to request an acknowledgment data packet from the second transceiver 200 by setting an indication bit in a header of a transmitted data packet. For example, the packet transmission controller 10 may be configured to control a radio link (RLC) of the first transceiver 100.

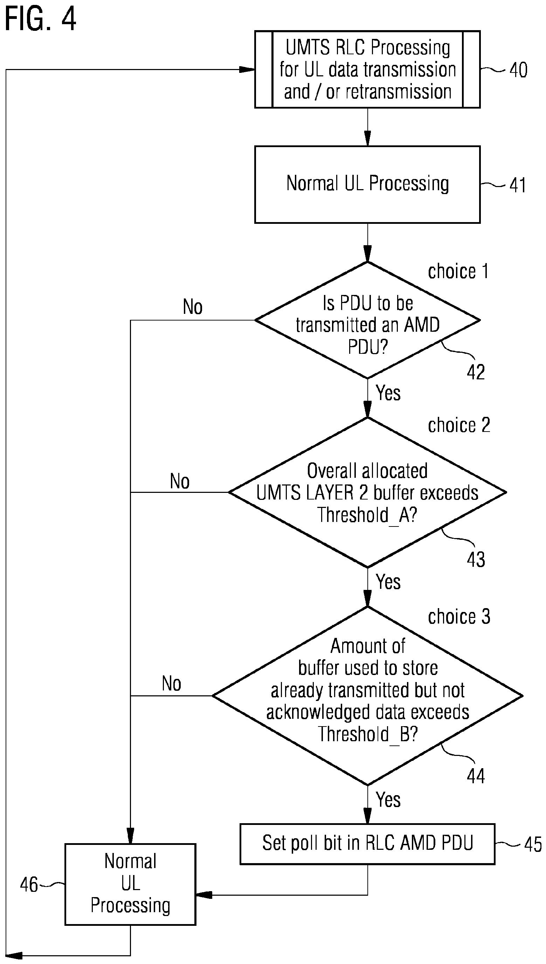

Fig. 4 depicts a flow chart of an example of data processing of an RLC entity for AMD PDU in an example. The flow chart shown in Fig. 4 illustrates the handling in an example. Whenever an RLC PDU, prepared for transmission or retransmission (as indicated by step 40) during data processing by the transmitting entity as indicated by step 41, is an AMD PDU (choice 1, step 42), it is checked if the overall allocated UMTS Layer 2 buffer size exceeds Threshold_A (choice 2, step 43). If so, it is also checked if the amount of UMTS Layer 2 buffer used to store already transmitted RLC AMD PDUs, which are not yet acknowledged, exceeds Threshold_B (choice 3, step 44). If all three conditions apply a Poll is set in the transmitted RLC AMD PDU, step 45. The values of the thresholds depend on the UE category and the physically available UMTS Layer 2 buffer size and can be configured in implementations determined by given capabilities and capacities. In this example the method proceeds in step 46 with normal UL processing, if one of the condition is not fulfilled without setting the poll bit and else after setting the poll bit.

Independent of the chosen size of available memory to be used in UMTS Layer 2, there are situations where the memory is not sufficient to buffer all data and user data needs to be discarded. This can happen on both UE and NodeB side (to which the first or second or both transceivers 100, 200 may correspond) and in both cases the end user is impacted. Either discarded data needs to be retransmitted on higher layer (e.g. File Transfer Protocol (FTP)) or in case of real time data transfer user data is finally lost.

Examples may provide the advantage that the available memory resources are monitored and, if needed, an already existing 3GPP method (RLC polling) is used to prevent or at least to decrease the probability to run out of memory. Furthermore this solution is independent of the static configuration of UMTS RLC parameters "Poll_PDU", "Poll_SDU", "Poll_Window" or "timer based polling" and problems caused by unsuitable configurations can be prevented.

As memory resources are expensive, especially low cost UEs are expected to have limited Layer 2 buffer sizes. Also with the evolvement of UMTS and LTE to the Internet of Things (IoT) and Machine-to-Machine communication (M2M), a steadily increasing amount of low cost (low memory) UEs can be expected and this solution can help to allow efficient usage of available memory resources.

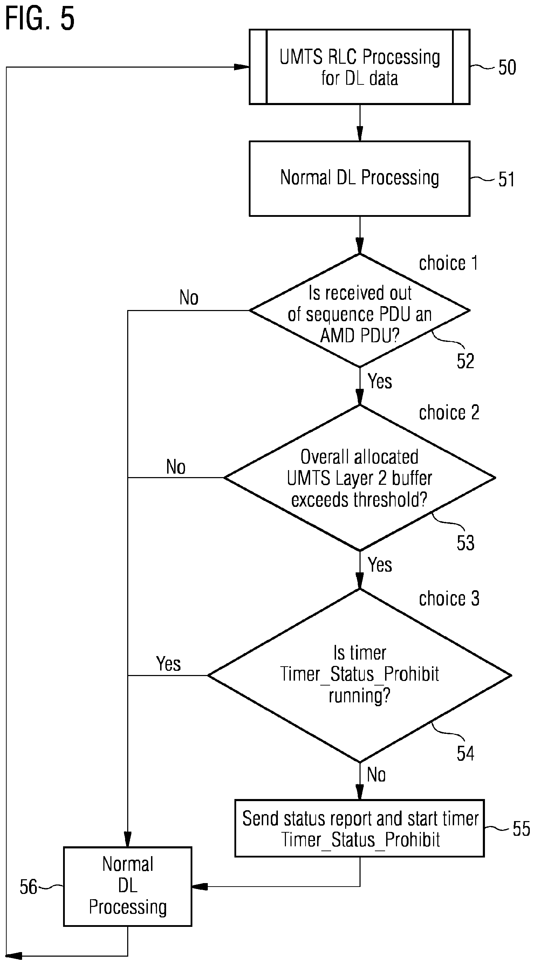

Fig. 5 depicts a flow chart of data processing of a receiving RLC entity for OOS AMD PDU in an example. The flow chart shown in Fig. 5 illustrates the handling in example on the receiver side. During processing (steps 50, 51) by the receiving RLC entity and whenever an RLC PDU is received out of sequence, it is checked if this PDU is an AMD PDU (choice 1, step 52). For such a PDU it is checked if the overall allocated UMTS Layer 2 buffer exceeds a certain threshold (choice 2, step 53). In that case the transmission of an RLC STATUS PDU is triggered and it is checked if timer Timer_Status_Prohibit is running (choice 3, step 54). When this timer is running, the transmission of an RLC STATUS PDU is deferred until timer expiry and normal DL processing is continued as indicated by step 56, likewise when any of the above conditions is not fulfilled. Otherwise the transmission of a status report is initiated, step 55, and the timer is started.

This example can also be extended to force transmission of an RLC STATUS PDU even if timer Timer_Status_Prohibit is still running (choice 3, step 54). When the overall allocated UMTS Layer 2 buffer size exceeds a critical second threshold, then the immediate transmission of an RLC STATUS PDU shall be forced in some examples. This can be regarded as last attempt to request missing RLC AMD PDUs to prevent that subsequently received out of sequence AMD PDUs need to be discarded. The threshold values may depend on or be set according to the UE category and the physically available UMTS Layer 2 buffer size and shall be configured by implementations. Some examples may monitor available memory resources and the transmission of an RLC STATUS PDU may be triggered just as needed, i.e. independent of the actual overall scenario and even independent of possibly unsuitable static RLC configurations.

Summarizing, at least in some examples a transmitting UMTS RLC entity may set the poll bit within RLC AMD PDUs in case of shortage of available Layer 2 memory and when large amount of already transmitted RLC AMD PDUs are waiting for acknowledgement by the RLC peer entity via UMTS RLC status reporting. The transmitting UMTS RLC entity may monitor usage of available Layer 2 memory. The transmitting UMTS RLC entity shall monitor the amount of user data which is already transmitted within RLC AMD PDUs but not acknowledged yet. If the overall allocated available Layer 2 memory exceeds a first threshold, e.g. Threshold_A, and the amount of already transmitted but not acknowledged RLC AMD PDUs exceeds a second threshold, e.g. Threshold_B, the poll bit shall be set in the next RLC AMD PDU. Values for Threshold_A and Threshold_B may depend on the UE category, the totally available Layer 2 buffer size and performance evaluations of several use cases. Values for Threshold_A and Threshold_B may be set by implementations.

A receiving UMTS RLC AM entity may trigger transmission of an RLC STATUS PDU in case shortage of the available Layer 2 memory occurs due to out of sequence reception of AMD PDUs. A receiving UMTS RLC AM entity shall monitor the usage of available Layer 2 memory. If an out of sequence AMD PDU is received and if the available Layer 2 memory falls below a threshold, the transmission of an RLC STATUS PDU shall be triggered. If a second threshold is reached and nearly all Layer 2 buffer is occupied, the transmission of an RLC STATUS PDU can even be forced in case the configured timer duration of Timer_Status_Prohibit is unreasonably long. Even when the transmission of an RLC STATUS PDU is forced, timer Timer_Status_Prohibit shall be restarted to prevent RCL STATUS PDU transmissions occurring too frequently. The values for the thresholds depend on the UE category, the totally available Layer 2 buffer size and performance evaluations of several use cases. The values for the thresholds shall be set by implementations.

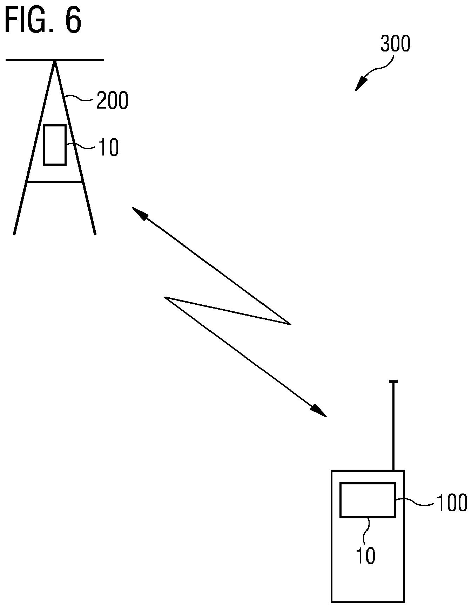

Fig. 6 shows examples of a mobile terminal 100, a base station transceiver 200 and a mobile communication system 300. As indicated in Fig. 6 the first transceiver 100 is implemented as mobile transceiver comprising an example of the above-described packet transmission controller 10 or apparatus 10. The example of the second transceiver 200 is implemented as base station transceiver also comprising an example of the above-described packet transmission controller 10 or apparatus 10.

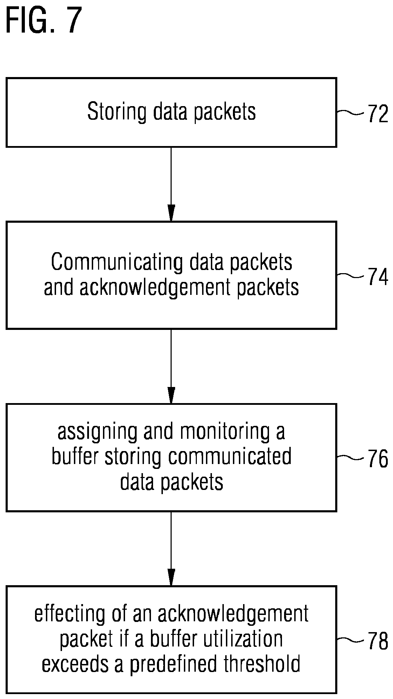

Fig. 7 depicts a block diagram of an example of a method for controlling packet transmission in an example. The method for controlling packet transmission for a first transceiver 100 of a mobile communication system 300 comprises storing 72 data packets and communicating 74 data packets and acknowledgment packets with a second transceiver 200 of the mobile communication system 300. The acknowledgement packets comprise positive or negative acknowledgements for a successful or an unsuccessful communication of the data packets. The method further comprises assigning and monitoring 76 a buffer storing communicated data packets until successful communication of the stored data packets is acknowledged in an acknowledgement packet. The method comprises effecting 78 communication of an acknowledgment packet with the second transceiver 200 if a buffer utilization exceeds a predefined threshold.

The examples as described herein may be summarized as follows:
Example 1 is a packet transmission controller (10) for a transceiver (100) of a mobile communication system (300), the packet transmission controller (10) comprising a memory module (12) configured to store data packets;
   a transceiver module (14) configured to communicate data packets and acknowledgment packets over an air interface or antenna, the acknowledgement packets comprising positive or negative acknowledgements for a successful or an unsuccessful communication of the data packets, respectively; and
   a control module (16) configured to control the memory module (12) and the transceiver module (14), wherein the control module (16) is configured to assign and monitor a buffer to store communicated data packets until successful communication of the stored data packets is acknowledged in an acknowledgement packet, wherein the control module (16) is further configured to effect communication of an acknowledgment data packet if a buffer utilization exceeds a predefined threshold.

Example 2 is the packet transmission controller (10) of example 1, wherein the control module (16) is configured to provide successfully acknowledged data packets to a further processing entity in sequence.

Example 3 is the packet transmission controller (10) of one of the examples 1 or 2, wherein the control module (16) is configured to transmit data packets over the air interface or antenna and to store data packets transmitted over the air interface or the antenna in the buffer, wherein the control module (16) is further configured to delete sequentially acknowledged data packets from the buffer.

Example 4 is the packet transmission controller (10) of example 3, wherein the control module (16) is configured to transmit data packets over the air interface or the antenna and to request an acknowledgement packet, if the buffer utilization exceeds the predefined threshold.

Example 5 is the packet transmission controller (10) of one of the examples 1 to 4, wherein the control module (16) is configured to store data packets received in the buffer, wherein the control module (16) is further configured to sequentially forward acknowledged data packets to a further processing entity of the transceiver (100).

Example 6 is the packet transmission controller (10) of example 5, wherein the control module (16) is configured to transmit an acknowledgment packet over the air interface or the antenna if the buffer utilization exceeds the predefined threshold.

Example 7 is the packet transmission controller (10) of example 5, wherein the control module (16) is configured to transmit an acknowledgment packet over the air interface or the antenna if the buffer utilization exceeds the predefined threshold and a predefined time since a transmission of a previous acknowledgment packet has expired.

Example 8 is the packet transmission controller (10) of one of the examples 1 to 7, wherein the data packets are acknowledged mode data packets, wherein the control module (16) is configured to further communicate non-acknowledged mode data packets for which no acknowledgment packets are communicated, and wherein the control module (16) is configured to effect communication of an acknowledgment data packet if the buffer utilization exceeds the predefined threshold and if a communicated data packet is an acknowledged mode data packet.

Example 9 is the packet transmission controller (10) of one of the examples 1 to 8, wherein the control module (16) is configured to assign the buffer for transmitted data packets and for received data packets, wherein the control module (16) is configured to effect communication of an acknowledgment data packet if an overall buffer utilization for the transmitted and the received data packets exceeds the predefined threshold.

Example 10 is the packet transmission controller (10) of one of the examples 1 to 8, wherein the control module (16) is configured to assign the buffer for transmitted data packets and for received data packets, wherein the control module (16) is configured to effect the communication of the acknowledgment data packet if an overall buffer utilization for the transmitted and the received data packets exceeds a predefined first threshold and if a buffer amount of transmitted but not acknowledged data packets exceeds a second threshold.

Example 11 is the packet transmission controller (10) of one of the examples 1 to 7, wherein the data packets are acknowledged mode data packets, wherein the control module (16) is configured to further communicate non-acknowledged mode data packets for which no acknowledgment packets are communicated, and wherein the control module (16) is configured to transmit an acknowledgment data packet over the air interface or the antenna if an acknowledged mode data packet is received out of sequence and the buffer utilization exceeds the predefined threshold.

Example 12 is the packet transmission controller (10) of example 11, wherein the control module (16) is configured to assign the buffer for transmitted data packets and for received data packets, wherein the control module (16) is configured to transmit the acknowledgment data packet over the air interface or the antenna further if an overall buffer utilization for the transmitted and the received data packets exceeds the predefined threshold.

Example 13 is the packet transmission controller (10) of one of the examples 11 or 12, wherein the control module (16) is configured to transmit the acknowledgment data packet over the air interface or the antenna further if a predefined time since transmission of a previous acknowledgment packet has expired.

Example 14 is the packet transmission controller (10) of example 13, wherein the predefined threshold is a first predefined threshold, wherein the control module (16) is configured to transmit the acknowledgment data packet over the air interface or the antenna further if the overall buffer utilization for the transmitted and the received data packets exceeds a second predefined threshold and if a time since transmission of the previous acknowledgment packet is less than the predefined time, wherein the second predefined threshold is higher than the first predefined threshold.

Example 15 is the packet transmission controller (10) of one of the examples 1 to 14, wherein the control module (16) is configured to request an acknowledgment data packet by setting an indication bit in a header of a transmitted data packet.

Example 16 is the packet transmission controller (10) of one of the examples 1 to 15, configured to control a radio link of the transceiver (100).

Example 17 is an apparatus (10) for controlling packet transmission for a transceiver (100) of a mobile communication system (300), the apparatus (10) comprising means (12) for storing data packets;
means (14) for communicating data packets and acknowledgment packets over an air interface or an antenna, the acknowledgement packets comprising positive or negative acknowledgements for a successful or an unsuccessful communication of the data packets; and
means (16) for controlling the means (12) for storing and the means (14) for communicating, wherein the means (16) for controlling is configured for assigning and monitoring a buffer storing communicated data packets until successful communication of the stored data packets is acknowledged in an acknowledgement packet, wherein the means (16) for controlling is further configured for effecting communication of an acknowledgment data packet if a buffer utilization exceeds a predefined threshold.

Example 18 is the apparatus (10) of example 17, wherein the means (16) for controlling is configured for providing successfully acknowledged data packets to further means for processing in sequence.

Example 19 is the apparatus (10) of one of the examples 17 or 18, wherein the means (16) for controlling is configured for transmitting data packets over the air interface or the antenna and for storing data packets transmitted over the air interface or the antenna in the buffer, wherein the means (16) for controlling is further configured for deleting sequentially acknowledged data packets from the buffer.

Example 20 is the apparatus (10) of example 19, wherein the means (16) for controlling is configured for transmitting data packets over the air interface or the antenna and for requesting an acknowledgement packet, if the buffer utilization exceeds the predefined threshold. Example 21 is the apparatus (10) of one of the examples 17 to 20, wherein the means (16) for controlling is configured for storing data packets received in the buffer, wherein the means (16) for controlling is further configured for sequentially forwarding acknowledged data packets to further means for processing of the transceiver (100).

Example 22 is the apparatus (10) of example 21, wherein the means (16) for controlling is configured for transmitting an acknowledgment packet over the air interface or the antenna if the buffer utilization exceeds the predefined threshold.

Example 23 is the apparatus (10) of example 22, wherein the means (16) for controlling is configured for transmitting an acknowledgment packet over the air interface or the antenna if the buffer utilization exceeds the predefined threshold and a predefined time since a transmission of a previous acknowledgment packet has expired.

Example 24 is the apparatus (10) of one of the examples 17 to 23, wherein the data packets are acknowledged mode data packets, wherein the means (16) for controlling is configured for further communicating non-acknowledged mode data packets for which no acknowledgment packets are communicated, and wherein the means (16) for controlling is configured for effecting communication of an acknowledgment data packet if the buffer utilization exceeds the predefined threshold and if a communicated data packet is an acknowledged mode data packet.

Example 25 is the apparatus (10) of one of the examples 17 to 24, wherein the means (16) for controlling is configured for assigning the buffer for transmitted data packets and for received data packets, wherein the means (16) for controlling is configured for effecting communication of an acknowledgment data packet if an overall buffer utilization for the transmitted and the received data packets exceeds the predefined threshold.

Example 26 is the apparatus (10) of one of the examples 17 to 25, wherein the means (16) for controlling is configured for assigning the buffer for transmitted data packets and for received data packets, wherein the means (16) for controlling is configured for effecting the communication of the acknowledgment data packet if an overall buffer utilization for the transmitted and the received data packets exceeds a predefined first threshold and if a buffer amount of transmitted but not acknowledged data packets exceeds a second threshold. Example 27 is the apparatus (10) of one of the examples 17 to 26, wherein the data packets are acknowledged mode data packets, wherein the means (16) for controlling is configured for further communicating non-acknowledged mode data packets for which no acknowledgment packets are communicated, and wherein the means (16) for controlling is configured for transmitting an acknowledgment data packet over the air interface or the antenna if an acknowledged mode data packet is received out of sequence and the buffer utilization exceeds the predefined threshold.

Example 28 is the apparatus (10) of example 27, wherein the means (16) for controlling is configured for assigning the buffer for transmitted data packets and for received data packets, wherein the means (16) for controlling is configured for transmitting the acknowledgment data packet over the air interface or the antenna further if an overall buffer utilization for the transmitted and the received data packets exceeds the predefined threshold.

Example 29 is the apparatus (10) of one of the examples 27 or 28, wherein the means (16) for controlling is configured for transmitting the acknowledgment data packet over the air interface or the antenna further if a predefined time since transmission of a previous acknowledgment packet has expired.

Example 30 is the apparatus (10) of example 29, wherein the predefined threshold is a first predefined threshold, wherein the means (16) for controlling is configured for transmitting the acknowledgment data packet over the air interface or the antenna further if the overall buffer utilization for the transmitted and the received data packets exceeds a second predefined threshold and if a time since transmission of the previous acknowledgment packet is less than the predefined time, wherein the second predefined threshold is higher than the first predefined threshold.

Example 31 is the apparatus (10) of one of the examples 17 to 30, wherein the means (16) for controlling is configured for requesting an acknowledgment data packet by setting an indication bit in a header of a transmitted data packet.

Example 32 is the apparatus (10) of one of the examples 17 to 31, configured for controlling a radio link of the transceiver (100).

Example 33 is a radio transceiver comprising the packet transmission controller (10) of one of the examples 1 to 16 or an apparatus (10) of one of the examples 17 to 32.

Example 34 is a mobile terminal of a mobile communication system (300) comprising the radio transceiver of example 33.

Example 35 is a base station transceiver of a mobile communication system (300) comprising the radio transceiver of example 33.

Example 36 is a mobile communication system (300) comprising a mobile terminal according to example 34 and a base station transceiver according to example 35.

Example 37 is a method for controlling packet transmission for a transceiver (100) of a mobile communication system (300), the method comprising
storing (72) data packets;
communicating (74) data packets and acknowledgment packets over an air interface or an antenna, the acknowledgement packets comprising positive or negative acknowledgements for a successful or an unsuccessful communication of the data packets;
assigning and monitoring (76) a buffer storing communicated data packets until successful communication of the stored data packets is acknowledged in an acknowledgement packet; and
effecting (78) communication of an acknowledgment packet if a buffer utilization exceeds a predefined threshold.

Example 38 is the method of example 37, comprising providing successfully acknowledged data packets to further means for processing in sequence.

Example 39 is the method of one of the examples 37 or 38, comprising transmitting data packets over the air interface or the antenna, storing data packets transmitted over the air interface or the antenna in the buffer, and deleting sequentially acknowledged data packets from the buffer.

Example 40 is the method of example 19, comprising transmitting data packets over the air interface or the antenna and requesting an acknowledgement packet, if the buffer utilization exceeds the predefined threshold.

Example 41 is the method of one of the examples 37 to 40, comprising storing data packets received in the buffer, sequentially forwarding acknowledged data packets to further processing of the transceiver (100).

Example 42 is the method of example 41, comprising transmitting an acknowledgment packet over the air interface or the antenna if the buffer utilization exceeds the predefined threshold.

Example 43 is the method of example 42, comprising transmitting an acknowledgment packet over the air interface or the antenna if the buffer utilization exceeds the predefined threshold and a predefined time since a transmission of a previous acknowledgment packet has expired.

Example 44 is the method of one of the examples 37 to 43, wherein the data packets are acknowledged mode data packets, comprising communicating non-acknowledged mode data packets for which no acknowledgment packets are communicated, and effecting communication of an acknowledgment data packet if the buffer utilization exceeds the predefined threshold and if a communicated data packet is an acknowledged mode data packet.

Example 45 is the method of one of the examples 37 to 44, comprising assigning the buffer for transmitted data packets and for received data packets, and effecting communication of an acknowledgment data packet if an overall buffer utilization for the transmitted and the received data packets exceeds the predefined threshold.

Example 46 is the method of one of the examples 37 to 45, comprising assigning the buffer for transmitted data packets and for received data packets, and effecting the communication of the acknowledgment data packet if an overall buffer utilization for the transmitted and the received data packets exceeds a predefined first threshold and if a buffer amount of transmitted but not acknowledged data packets exceeds a second threshold.

Example 47 is the method of one of the examples 37 to 46, wherein the data packets are acknowledged mode data packets, comprising further communicating non-acknowledged mode data packets for which no acknowledgment packets are communicated, and transmitting an acknowledgment data packet if an acknowledged mode data packet is received out of sequence and the buffer utilization exceeds the predefined threshold.

Example 48 is the method of example 47, comprising assigning the buffer for transmitted data packets and for received data packets and transmitting the acknowledgment data packet over the air interface or the antenna further if an overall buffer utilization for the transmitted and the received data packets exceeds the predefined threshold.

Example 49 is the method of one of the examples 47 or 48, comprising transmitting the acknowledgment data packet over the air interface or the antenna further if a predefined time since transmission of a previous acknowledgment packet has expired.

Example 50 is the method of example 49, wherein the predefined threshold is a first predefined threshold, comprising transmitting the acknowledgment data packet over the air interface or the antenna further if the overall buffer utilization for the transmitted and the received data packets exceeds a second predefined threshold and if a time since transmission of the previous acknowledgment packet is less than the predefined time, wherein the second pre-defined threshold is higher than the first predefined threshold.

Example 51 is the method of one of the examples 47 to 50, comprising requesting an acknowledgment data packet over the air interface or the antenna by setting an indication bit in a header of a transmitted data packet.

Example 52 is the method of one of the examples 37 to 51, comprising controlling a radio link of the transceiver (100).

Example 53 is a computer program having a program code for performing the method of at least one of the examples 37 to 52, when the computer program is executed on a computer, a processor, or a programmable hardware component.

Example 54 is a machine readable storage including machine readable instructions, when executed, to implement a method or realize an apparatus as exemplified in any pending example.

Example 55 is a machine readable medium including code, when executed, to cause a machine to perform the method of any one of examples 37 to 52.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means" etc., may be implemented in the form of dedicated hardware, such as "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. An apparatus (10) for controlling packet transmission for a transceiver (100) of a mobile communication system (300), the apparatus (10) comprising
means (12) for storing data packets;
means (14) for communicating data packets and acknowledgment packets over an air interface or an antenna, the acknowledgement packets comprising positive or negative acknowledgements for a successful or an unsuccessful communication of the data packets; and
means (16) for controlling the means (12) for storing and the means (14) for communicating, wherein the means (16) for controlling is configured for assigning and monitoring a buffer storing communicated data packets until successful communication of the stored data packets is acknowledged in an acknowledgement packet, wherein the means (16) for controlling is further configured for effecting communication of an acknowledgment data packet if a buffer utilization exceeds a predefined threshold.

2. The apparatus (10) of claim 1, wherein the means (16) for controlling is configured for providing successfully acknowledged data packets to further means for processing in sequence.

3. The apparatus (10) of one of the claims 1 or 2, wherein the means (16) for controlling is configured for transmitting data packets over the air interface or the antenna and for storing data packets transmitted over the air interface or the antenna in the buffer, wherein the means (16) for controlling is further configured for deleting sequentially acknowledged data packets from the buffer.

4. The apparatus (10) of claim 3, wherein the means (16) for controlling is configured for transmitting data packets over the air interface or the antenna and for requesting an acknowledgement packet, if the buffer utilization exceeds the predefined threshold.

5. The apparatus (10) of one of the claims 1 to 4, wherein the means (16) for controlling is configured for storing data packets received in the buffer, wherein the means (16) for controlling is further configured for sequentially forwarding acknowledged data packets to further means for processing of the transceiver (100).

6. The apparatus (10) of claim 5, wherein the means (16) for controlling is configured for transmitting an acknowledgment packet over the air interface or the antenna if the buffer utilization exceeds the predefined threshold.

7. The apparatus (10) of claim 6, wherein the means (16) for controlling is configured for transmitting an acknowledgment packet over the air interface or the antenna if the buffer utilization exceeds the predefined threshold and a predefined time since a transmission of a previous acknowledgment packet has expired.

8. The apparatus (10) of one of the claims 1 to 7, wherein the data packets are acknowledged mode data packets, wherein the means (16) for controlling is configured for further communicating non-acknowledged mode data packets for which no acknowledgment packets are communicated, and wherein the means (16) for controlling is configured for effecting communication of an acknowledgment data packet if the buffer utilization exceeds the predefined threshold and if a communicated data packet is an acknowledged mode data packet.

9. The apparatus (10) of one of the claims 1 to 8, wherein the means (16) for controlling is configured for assigning the buffer for transmitted data packets and for received data packets, wherein the means (16) for controlling is configured for effecting communication of an acknowledgment data packet if an overall buffer utilization for the transmitted and the received data packets exceeds the predefined threshold.

10. The apparatus (10) of one of the claims 1 to 10, wherein the means (16) for controlling is configured for assigning the buffer for transmitted data packets and for received data packets, wherein the means (16) for controlling is configured for effecting the communication of the acknowledgment data packet if an overall buffer utilization for the transmitted and the received data packets exceeds a predefined first threshold and if a buffer amount of transmitted but not acknowledged data packets exceeds a second threshold.

11. The apparatus (10) of one of the claims 1 to 11, wherein the data packets are acknowledged mode data packets, wherein the means (16) for controlling is configured for further communicating non-acknowledged mode data packets for which no acknowledgment packets are communicated, and wherein the means (16) for controlling is configured for transmitting an acknowledgment data packet over the air interface or the antenna if an acknowledged mode data packet is received out of sequence and the buffer utilization exceeds the predefined threshold.

12. The apparatus (10) of claim 11, wherein the means (16) for controlling is configured for assigning the buffer for transmitted data packets and for received data packets, wherein the means (16) for controlling is configured for transmitting the acknowledgment data packet over the air interface or the antenna further if an overall buffer utilization for the transmitted and the received data packets exceeds the predefined threshold.

13. The apparatus (10) of one of the claims 11 or 12, wherein the means (16) for controlling is configured for transmitting the acknowledgment data packet over the air interface or the antenna further if a predefined time since transmission of a previous acknowledgment packet has expired.

14. A method for controlling packet transmission for a transceiver (100) of a mobile communication system (300), the method comprising
storing (72) data packets;
communicating (74) data packets and acknowledgment packets over an air interface or an antenna, the acknowledgement packets comprising positive or negative acknowledgements for a successful or an unsuccessful communication of the data packets;
assigning and monitoring (76) a buffer storing communicated data packets until successful communication of the stored data packets is acknowledged in an acknowledgement packet; and
effecting (78) communication of an acknowledgment packet if a buffer utilization exceeds a predefined threshold.

15. A computer program having a program code for performing the method of claim 14, when the computer program is executed on a computer, a processor, or a programmable hardware component.
